# FASCICULE DE BREVET EUROPEEN

(11) **EP 3 162 206 B1**
(45) Date de publication et mention de la délivrance du brevet: **17.07.2019**
(21) Numéro de dépôt: 16195841.8
(22) Date de dépôt: 26.10.2016
(51) Int. Cl.: A01M 7/00

(54) **DISPOSITIF DE TRAITEMENT DE VÉGÉTATIONS EN HAIES, EN RANGS OU DE GRANDES CULTURES, AVEC DES PRODUITS PHYTOPHARMACEUTIQUES, ÉQUIPE DE MOYENS RÉCUPERATEURS DESDITS PRODUITS**
VORRICHTUNG ZUR BEHANDLUNG VON VEGETATIONEN IN HECKEN- ODER REIHENPFLANZUNG ODER IN FORM VON ACKERKULTUREN MIT PHYTOPHARMAZEUTISCHEN PRODUKTEN, DIE MIT MITTELN ZUR RÜCKGEWINNUNG DIESER PRODUKTE AUSGESTATTET IST
DEVICE FOR TREATING VEGETATION IN HEDGES, IN ROWS OR FIELD CROPS, WITH PHYTOPHARMACEUTICAL PRODUCTS, PROVIDED WITH MEANS FOR RETRIEVING SAID PRODUCTS

(30) Priorité: 26.10.2015 FR 1560198
(43) Date de publication de la demande: 03.05.2017
(73) Titulaire: Touzan, Michel, 33850 Leognan (FR)
(72) Inventeur: Touzan, Michel, 33850 Leognan (FR)
(74) Mandataire: Aquinov

(56) Documents cités:
- WO-A1-2010/000896
- WO-A1-2013/090639
- FR-A1- 2 948 038
- FR-A1- 2 986 941
- US-A- 5 002 227

## Description

La présente invention vise un dispositif de traitement de végétations en haies ou en rangs palissés comme la vigne, ou de grandes cultures ledit traitement consistant en un traitement phytopharmaceutique avec des produits pulvérisés.

On sait que les végétations de haies fruitières ou de pieds palissés comme la vigne doivent subir des traitements phytopharmaceutiques. Pour la suite de la description, l'exemple retenu est celui de la vigne avec des pieds palissés et on parlera donc de rangs de pieds et de végétation incluant fruits et feuilles mais le dispositif trouve une application dans les haies arboricoles ou fruitières de façon strictement identique.

Ces traitements recourent à des produits qui peuvent avoir des effets sur les écosystèmes et sur la santé humaine mais dans tous les cas, qui ne sont certainement pas sans impact.

Des progrès ont été apportés aux produits eux-mêmes, aux doses administrées, aux moyens de les diffuser mais de façon surprenante, très peu de progrès ont été apportés aux dispositifs de pulvérisation eux-mêmes.

Pour la suite de la description, les produits phytopharmaceutiques en phase liquide tels que pulvérisés seront dénommés sous le vocable "bouillie", terme technique du domaine dont la définition est la suivante :
*"mélange d'un liquide, généralement d'eau, avec une préparation phytopharmaceutique destinée à être appliquée par pulvérisation."*

En entrant dans le détail de la pulvérisation, il existe 3 moyens de pulvériser :
- La pulvérisation à jet projeté : la bouillie est directement projetée à travers des buses à haute pression de 8 à 15 bars, grâce à une pompe haute pression,
- La pulvérisation à jet porté : la bouillie est à haute pression, 8 0 15 bars et supportée par un flux d'air à haute vitesse, de l'ordre de 100 à 150km/h, les gouttelettes sont "portées" par l'air, ce qui assure une bonne pénétration dans le feuillage,
- La pulvérisation pneumatique : la bouillie est à faible pression 2 bars et l'air est à haute vitesse, 200 à 300km/h, et la projection simultanée conduit à l'éclatement de la bouillie en fines gouttelettes.

Lors de l'utilisation de ces différents procédés de pulvérisation, les gouttelettes de bouillie non fixées sur la végétation, soit chutent au sol, soit diffusent dans l'atmosphère au détriment des écosystèmes et des personnes.

Ces inconvénients sont partiellement corrigés par des matériels de pulvérisation munis de panneaux récupérateurs qui permettent de limiter en partie la diffusion de la bouillie dans l'atmosphère et sur le sol et de recycler une partie des gouttelettes non fixées sur la végétation.

Les coûts, les difficultés de mise en oeuvre du fait de l'encombrement notamment, les résultats imparfaits conduisent à des utilisations limitées de ces dispositifs.

C'est le cas par exemple du dispositif du brevet US 5 002 227 qui décrit un agencement dans lequel les gouttelettes sont pulvérisées de part et d'autre du rang, avec des panneaux collecteurs de part et d'autre dudit rang de façon à récupérer les écoulements recueillis en partie inférieure des panneaux collecteurs latéralement. De plus, une aspiration par le dessus assurant complète la collecte vers le haut. Cet agencement illustre parfaitement le traitement avec de fortes quantités de produits qui ruissellent sur les panneaux de collecte et non une diffusion tel que dans l'invention qui est décrite plus avant dont uniquement la bouillie non fixée sur la végétation est collectée, sans aucun besoin de collecte latérale.

Dans le cas des grandes cultures, le problème subsiste même s'il existe des différences. En effet, la pulvérisation est réalisée du haut vers le bas et la gravité provoque le dépôt de la bouillie sur la culture avec une moindre tendance à la diffusion dans l'atmosphère.

En réalité, la diffusion a quand même lieu d'une part du fait que lors de la pulvérisation, il se forme quand même des micro gouttelettes qui peuvent être emportées par le vent et les circulations d'air liées au déplacement des matériels et d'autres part du fait qu'il s'agit de rampes de pulvérisation de très grandes dimensions avec des très nombreuses buses.

Le dispositif selon la présente invention peut être adapté exactement de la même façon en prévoyant un couvercle de confinement au-dessus des buses verticales ou légèrement inclinées qui projettent la bouillie verticalement du haut vers le bas, ledit couvercle de confinement permettant le confinement des micro gouttelettes émises, plus sensibles aux effets du vent qu'à celui de la gravité.

Le dispositif selon la présente invention propose un agencement de pulvérisation qui pallie les inconvénients des dispositifs de l'art antérieur.

Ce dispositif permet de collecter la bouillie non fixée sur la végétation, de traiter le flux d'air associé afin de séparer les liquides et l'air de façon à supprimer quasiment toute la diffusion dans l'atmosphère, en limitant de plus très fortement la chute de gouttelettes de bouillie au sol dans le cas de végétations en haies ou en rangs et sans pour autant perturber la projection au sol dans le cas des grandes cultures. Le dispositif permet dans tous les cas de recycler la bouillie.

Le dispositif permet également de provoquer une turbulence provoquant l'agitation de la végétation pour améliorer fortement la diffusion de la bouillie et la répartition de la bouillie sur ladite végétation.

Le dispositif selon la présente invention est embarqué, porté sur un engin ou tracté sur une remorque, d'un encombrement limité en inter-rangs et d'une grande fiabilité du fait de la simplicité de ses organes constituants, et donc fiable en lui-même.

Le dispositif est maintenant décrit suivant un mode de réalisation préférentiel, non limitatif, cette description étant illustrée par les dessins annexés, dessins sur lesquels les figures montrent :
- Figure 1 : une vue en coupe du dispositif selon la présente invention,
- Figure 2 : une vue schématique du dispositif en perspective en situation sur un rang,
- Figure 3 : une vue du dispositif en élévation latérale, monté sur un engin agricole,
- Figure 4 : une vue du dispositif selon la configuration de la figure 3 mais vu de dessus,
- Figure 5 : une vue schématique du cycle de fonctionnement,
- Figure 6 : une vue d'un outil de pulvérisation complémentaire pour les cultures en rangs, et
- Figure 7 : une vue d'un agencement pour une rampe de pulvérisation pour les grandes cultures, équipée du dispositif selon la présente invention.

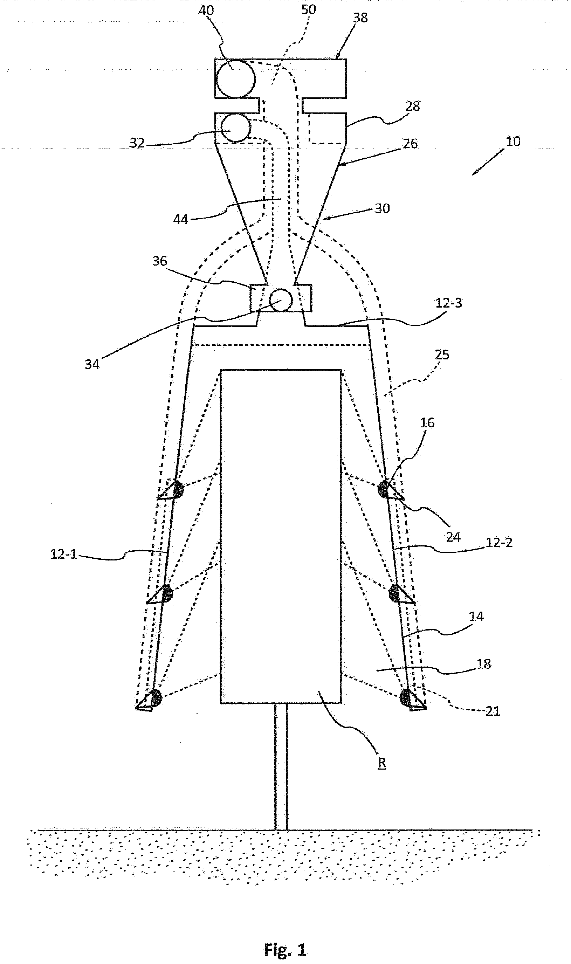

Sur la figure 1, on a représenté un rang de vigne R, un dispositif 10 selon la présente invention, sachant qu'ils peuvent être multiples pour traiter plusieurs rangs simultanément.

De même, le rang de vigne R a été retenu pour exemple mais le dispositif trouve application pour des haies fruitières ou arboricoles comme indiqué en préambule.

Ce dispositif comprend un couvercle de confinement 12 fermé, comprenant deux parois latérales 12-1 et 12-2 ainsi qu'une paroi supérieure 12-3, formant ainsi un volume intérieur 14 de confinement à section sensiblement en U renversé.

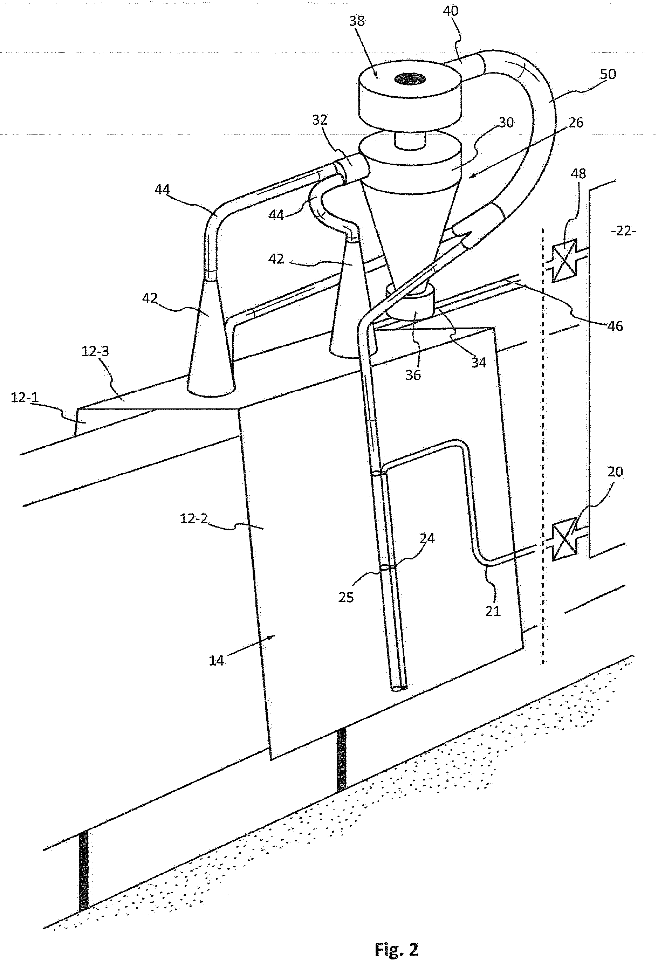

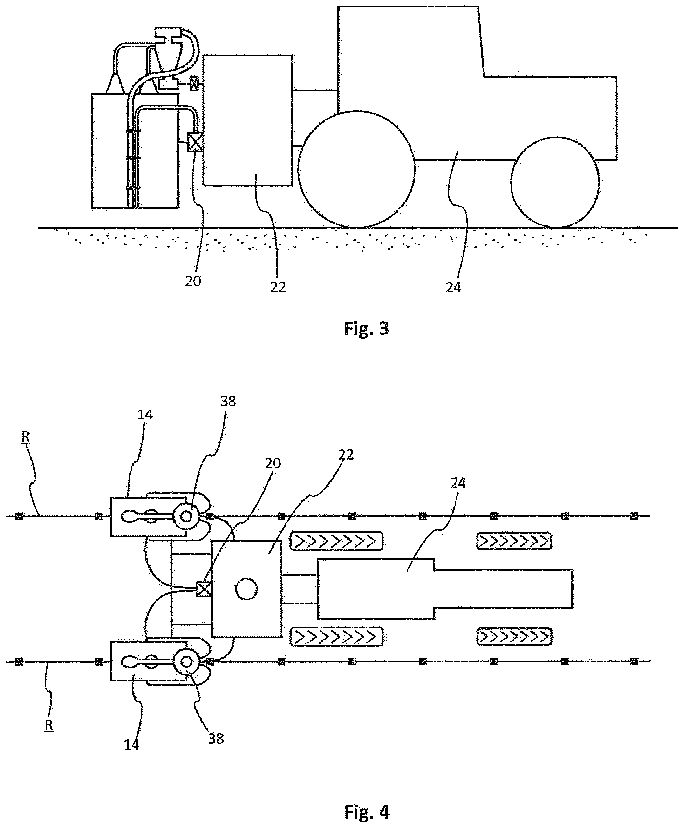

Chaque paroi latérale est équipée de rampes de buses 16 de diffusion d'un jet 18 projeté de bouillie, c'est-à-dire de bouillie sous pression, ladite pression étant générée de façon connue par une pompe 20 interposée sur un conduit 21, associé à une cuve 22, l'ensemble étant visible sur les figures 1, 2, 3 et 4. La pompe engendre une pression de 8 à 15 bars pour donner un ordre de grandeur.

La cuve 22 est généralement portée par un engin agricole 24 ou peut être montée sur une remorque tractée par ledit engin.

Chaque paroi latérale12-1, 12-2 est équipée de rampes de buses 25 de diffusion d'air.

Le dispositif 10 comprend en partie supérieure, sur la paroi 12-3 supérieure dans le mode de réalisation représenté, des moyens 26 aspirateurs et séparateurs de l'atmosphère du volume intérieur 14 du couvercle de confinement (12).

Ces moyens 26 aspirateurs et séparateurs comprennent au moins un hydrocyclone 28 comportant chacun un corps 30 en forme de cône renversé, muni d'une entrée 32 tangentielle en partie supérieure et d'une sortie 34 en partie inférieure, ladite sortie comportant une boîte 36 de sous-verse.

L'entrée 32 tangentielle est avantageusement équipée de façon connue d'un filtre afin de retenir les éventuels débris de feuilles et autres particules.

L'hydrocyclone 28 est surmonté d'un ventilateur 38 qui crée une aspiration jusque dans le volume intérieur 14 et à l'arrivée dans le corps 30 de l'hydrocyclone en partie supérieure, le flux subit une circulation en vortex avec séparation des produits lourds, en l'occurrence les gouttelettes et les produits légers en l'occurrence l'air. Ce ventilateur 38 est muni d'une sortie 40.

Ces moyens 26 aspirateurs et séparateurs sont complétés par des conduits de liaison.

Ainsi le volume intérieur 14 comprend au moins une prise 42 traversante d'aspiration, ménagée sur la paroi supérieure 12-3. En l'occurrence, il est prévu deux prises 42 traversantes d'aspiration. Un conduit 44 relie cette au moins une prise traversante d'aspiration à l'entrée 32 de l'hydrocyclone.

La sortie 34 inférieure de l'hydrocyclone et plus particulièrement la boîte 36 de sous-verse est reliée par un conduit 46 au réservoir 22 à travers une pompe 48, l'ensemble étant avantageusement muni d'un filtre de façon connue.

La sortie 40 du ventilateur 38 est reliée par un conduit 50 aux rampes de buses 25 de diffusion d'air.

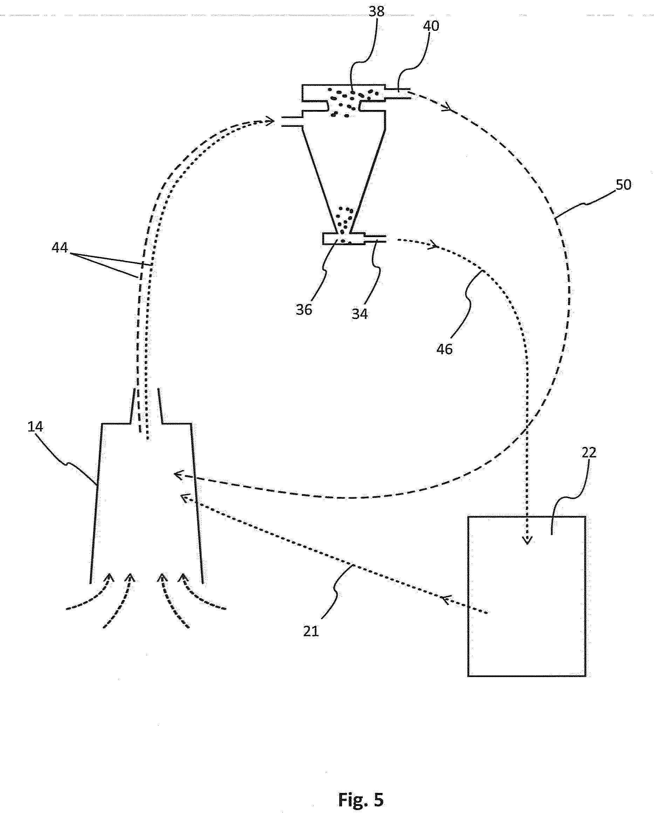

En regard de la figure 5, on comprend que le dispositif 10 est mis en place sur un rang de vigne R par exemple.

Les buses 24 projettent la bouillie sous pression sur les plants du rang de vigne R.

Durant cette projection, le ventilateur 38 provoque un courant d'air ascendant en provenance de la base du volume intérieur 14 du couvercle de confinement 12 où l'air est aspiré.

Ce courant d'air ascendant conduit les gouttelettes de bouillie non fixées sur la végétation, vers l'hydrocyclone qui assure la séparation de l'air et des gouttelettes. Sur la figure 5, les gouttelettes sont représentées en trait discontinu petits tirets et l'air est représenté en trait discontinu grands tirets.

Les gouttelettes de bouillie sont collectées dans la boîte 36 de sous-verse et sont transférées et recyclées vers la cuve 22.

L'air aspiré par le ventilateur est conduit à travers la sortie 40 et le conduit 50 vers la rampe de buses d'air 25, dans le volume intérieur 14. Cet air sous légère pression provoque une agitation de la végétation des plants de vigne et donc un dépôt de bouillie efficace, bien réparti sur toutes les surfaces concernées vers lesquelles les buses sont dirigées.

On combine ainsi de la pulvérisation par jets projetés et une agitation par air sous pression. La végétation est exempte d'agression liée à l'air sous pression puisque celle-ci reste très limitée.

Le recyclage est ainsi d'une grande efficacité, on peut parler de cyclopulvérisation avec trois effets qui sont :
- la récupération/recyclage de la bouillie,
- le jet projeté efficace, simple et fiable, et
- l'agitation des feuilles par le recyclage de l'air d'aspiration.

Les pertes externes, notamment la chute de bouillie au sol, sont donc très limitées et les rejets à l'atmosphère sont négligeables.

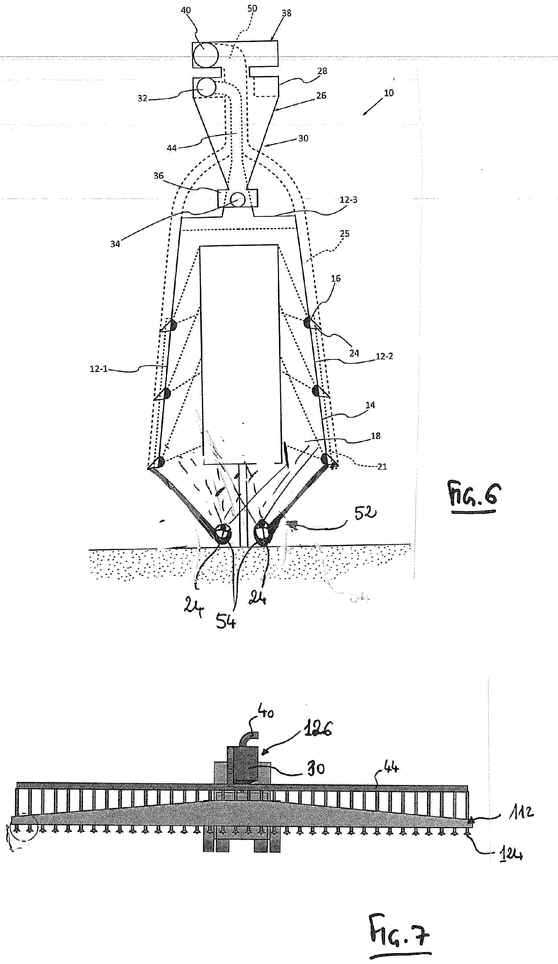

Sur la figure 6, on a représenté un outil complémentaire 52 qui consiste en au moins un sabot 54 traîné au sol et/ou supporté par le couvercle de confinement 12 fermé, ledit outil complémentaire comportant au moins une buse 24 de pulvérisation comme celles qui équipent le couvercle de confinement 12 et qui diffusent dans le volume intérieur 14. Un sabot 54 peut être prévu de chaque côté du rang.

La au moins une buse 24 est dimensionnée et présente un espace de projection adapté pour projeter le jet dans le volume intérieur 14 défini par le couvercle de confinement 12, ce jet étant orienté pour projeter du bas vers le haut.

Ceci permet de traiter avec grande efficacité d'abord les grappes puis les feuilles des plants du rang par le dessous.

On note que le dispositif permet de récupérer et de collecter la bouillie en excès qui ne serait pas retenue par les feuilles.

Dans le cas des grandes cultures, l'agencement est identique sauf que le couvercle de confinement 112 présente une géométrie en U de hauteur plus réduite pour se situer autour des buses 124 qui sont orientées de façon sensiblement verticale. Le couvercle de confinement 112 est uniquement disposé au-dessus de la culture, sans la confiner sur les côtés. En effet, le U est orienté perpendiculairement au sens d'avancement. Dans ce cas, les termes latéraux sont à remplacer par "avant" et "arrière".

Il est aussi possible de prévoir des couvercles de confinement individuels, associés à chaque buse.

Les éléments intégralement conservés par rapport à la version haies et rangs comportent les mêmes références et ne sont pas expliqués de nouveau, les différences visant uniquement les dimensionnements.

La bouillie diffusée dans l'air et non épandue est aspirée vers le couvercle de confinement 112 et cet air, chargé, est à son tour traité par passage à travers les moyens 126 aspirateurs et séparateurs des gouttelettes de bouillies, disposés au-dessus du volume intérieur du couvercle de confinement 112.

## Revendications

1. Dispositif (10) de traitement de végétations en haies ou en rangs palissés, ou de grandes cultures, ledit traitement consistant en un traitement phytopharmaceutique avec une bouillie pulvérisée, à partir d'une cuve (22) contenant ladite bouillie, associée à un engin agricole, comprenant un couvercle de confinement (12,112) définissant un volume intérieur (14,114), des rampes avec des buses (24,124) de pulvérisation de bouillie, et des moyens (26,126) aspirateurs et séparateurs des gouttelettes de bouillie non déposées, reliés par le dessus au volume intérieur (14, 114) dudit couvercle de confinement, **caractérisé en ce que** les moyens (26, 126) aspirateurs et séparateurs des gouttelettes de bouillie comprennent un hydrocyclone (28) muni d'un corps (30) en forme de cône comportant une entrée (32) tangentielle en partie supérieure et une sortie (34) inférieure en partie inférieure du corps (30).

2. Dispositif (10) de traitement de végétations en haies ou en rangs palissés ou de grandes cultures, selon la revendication 1, **caractérisé en ce que** le couvercle de confinement (12,112) est en forme de U renversé, avec deux parois latérales (12-1, 12-2) ou avant et arrière et une paroi (12-3) supérieure.

3. Dispositif (10) de traitement de végétations en haies ou en rangs palissés, ou de grandes cultures selon la revendication 1 ou 2, **caractérisé en ce que** les moyens (26,126) aspirateurs et séparateurs des gouttelettes de bouillie comprennent un ventilateur (38) avec une sortie (40).

4. Dispositif (10) de traitement de végétations en haies ou en rangs palissés, ou de grandes cultures selon la revendication 3, **caractérisé en ce que** la sortie (40) du ventilateur (38) est reliée par un conduit (50) d'air à des rampes de buses d'air (25) disposées dans le volume intérieur (14) du couvercle de confinement (12).

5. Dispositif (10) de traitement de végétations en haies ou en rangs palissés, selon l'une quelconque des revendications précédentes, **caractérisé en ce que** l'hydrocyclone (28) est relié par des conduits (44) à au moins une prise (42) traversante d'aspiration, située sur la paroi (12-3) supérieure de le volume intérieur (14) du couvercle de confinement (12).

6. Dispositif (10) de traitement de végétations en haies ou en rangs palissés, selon l'une quelconque des revendications précédentes, **caractérisé en ce que** la bouillie est émise à travers les buses (24) en jet projeté afin de générer des gouttelettes projetées.

7. Dispositif (10) de traitement de végétations en haies ou en rangs palissés, selon l'une quelconque des revendications précédentes, **caractérisé en ce que** la sortie (34) inférieure en partie inférieure du corps (30) de l'hydrocyclone (28) est munie d'une boîte (36) de sous-verse.

8. Dispositif (10) de traitement de végétations en haies ou en rangs palissés, ou de grande culture selon la revendication 7, **caractérisé en ce que** la boîte (36) de sous-verse est reliée à la cuve (22) par un conduit (46) au réservoir (22) à travers une pompe (48).

9. Dispositif (10) de traitement de végétations en haies ou en rangs palissés, selon l'une quelconque des revendications précédentes, **caractérisé en ce qu'**il comprend un outil complémentaire (52) de pulvérisation avec au moins une buse (24) diffusant du bas vers le haut.

## Patentansprüche

1. Vorrichtung (10) zur Behandlung von Heckenpflanzungen, hochgebundenen Reihenpflanzungen oder Ackerkulturen, wobei die Behandlung in einer phytopharmazeutischen Behandlung mit einem zerstäubten Brei bestehen, ausgehend von einem Behälter (22), der den Brei enthält und mit einer Agrarmaschine verbunden ist, mit einer Hüllabdeckung (12, 112), die ein Innenvolumen (14, 114) begrenzt, Reihungen von Düsen (24, 124) zur Zerstäubung des Breis und mit Mitteln (26, 126) zum Ansaugen und Trennen der nicht abgeschiedenen Breitröpfchen, die mit dem oberen Bereich des Innenvolumens (14, 114) der Hüllabdeckung verbunden sind, **dadurch gekennzeichnet, dass** die Mittel (26, 126) zum Absaugen und Trennen der Breitröpfchen einen Hydrozyklon (28) aufweisen, der mit einem kegelförmigen Grundkörper (30) versehen ist, der im oberen Bereich einen tangentialen Einlass (32) und im unteren Bereich des Grundkörpers (30) einen unteren Auslass (34) aufweist.

2. Vorrichtung (10) zur Behandlung von Heckenpflanzungen, hochgebundenen Reihenpflanzungen oder Ackerkulturen nach Anspruch 1, **dadurch gekennzeichnet, dass** die Hüllabdeckung (12, 112) die Gestalt eines umgekehrten U aufweist, mit zwei seitlichen Wänden (12-1, 12-2) oder vorderseitigen und rückseitigen Wänden und einer oberen Wand (12-3).

3. Vorrichtung (10) zur Behandlung von Heckenpflanzungen, hochgebundenen Reihenpflanzungen oder Ackerkulturen nach Anspruch 1 oder 2, **dadurch gekennzeichnet, dass** die Mittel (26, 126) zum Ansaugen und Trennen der Breitröpfchen einen Ventilator (38) mit einem Ausgang (40) aufweisen.

4. Vorrichtung (10) zur Behandlung von Heckenpflanzungen, hochgebundenen Reihenpflanzungen oder Ackerkulturen nach Anspruch 3, **dadurch gekennzeichnet, dass** der Ausgang (40) des Ventilators (38) durch eine Luftleitung (50) mit Reihungen von Luftdüsen (25) verbunden ist, die in dem Innenvolumen (14) der Hüllabdeckung (12) angeordnet sind.

5. Vorrichtung (10) zur Behandlung von Heckenpflanzungen, hochgebundenen Reihenpflanzungen nach einem der vorhergehenden Ansprüche, **dadurch gekennzeichnet, dass** der Hydrozyklon (28) durch Leitungen (44) mit wenigstens einer Übergangsaufnahme (42) zum Ansaugen verbunden ist, die sich auf der oberen Wand (12-3) des Innenvolumens (14) der Hüllabdeckung (12) befindet.

6. Vorrichtung (10) zur Behandlung von Heckenpflanzungen, hochgebundenen Reihenpflanzungen nach einem der vorhergehenden Ansprüche, **dadurch gekennzeichnet, dass** der Brei durch die Düsen (24) als ausgestoßener Strahl abgegeben wird, um ausgeworfene Tröpfchen zu erzeugen.

7. Vorrichtung (10) zur Behandlung von Heckenpflanzungen, hochgebundenen Reihenpflanzungen nach einem der vorhergehenden Ansprüche **dadurch gekennzeichnet, dass** der untere Auslass (34) im unteren Bereich des Grundkörpers (30) des Hydrozyklons (28) mit einem Unterlaufbehälter (36) versehen ist.

8. Vorrichtung (10) zur Behandlung von Heckenpflanzungen, hochgebundenen Reihenpflanzungen oder Ackerkulturen nach Anspruch 7, **dadurch gekennzeichnet, dass** der Unterlaufbehälter (36) mit dem Behälter (22) durch eine Leitung (46) durch eine Pumpe (48) hindurch mit dem Speicher (22) verbunden ist.

9. Vorrichtung (10) zur Behandlung von Heckenpflanzungen, hochgebundenen Reihenpflanzungen nach einem der vorhergehenden Ansprüche, **dadurch gekennzeichnet, dass** diese ein ergänzendes Werkzeug (52) zur Zerstäubung mit wenigstens einer Düse (24) aufweist, die von unten nach oben diffundiert.

## Claims

1. A device (10) for treating vegetation in hedges or in trained rows, or field crops, said treatment consisting of a phytopharmaceutical treatment with a sprayed slurry from a tank (22) containing said slurry, associated with an agricultural machine, comprising an enclosing cover (12, 112) defining an internal volume (14, 114), racks with nozzles (24, 124) for spraying slurry, and means (26, 126) for suction and separation of non-deposited droplets of slurry, said means being connected from above to the internal volume (14, 114) of said enclosing cover, **characterised in that** the means (26, 126) for suction and separation of droplets of slurry comprises a hydrocyclone (28) provided with a body (30) in the form of a cone having a tangential inlet (32) in the upper part and a lower outlet (34) in the lower part of the body (30).

2. A device (10) for treating vegetation in hedges or in trained rows or field crops according to claim 1, **characterised in that** the enclosing cover (12, 112) is in the shape of an inverted U, with two lateral (12-1, 12-2) or front and rear walls and an upper wall (12-3).

3. A device (10) for treating vegetation in hedges or in trained rows or field crops according to claim 1 or 2, **characterised in that** the means (26, 126) for suction and separation of droplets of slurry comprises a fan (38) with an outlet (40).

4. A device (10) for treating vegetation in hedges or in trained rows or field crops according to claim 3, **characterised in that** the outlet (40) of the fan (38) is connected by an air conduit (50) to racks of air nozzles (25) arranged in the internal volume (14) of the enclosing cover (12).

5. A device (10) for treating vegetation in hedges or in trained rows or field crops according to any one of the preceding claims, **characterised in that** the hydrocyclone (28) is connected by conduits (44) to at least one suction port (42) situated on the upper wall (12-3) of the internal volume (14) of the enclosing cover (12).

6. A device (10) for treating vegetation in hedges or in trained rows or field crops according to any one of the preceding claims, **characterised in that** the slurry is discharged through the nozzles (24) as a projected jet in order to generate projected droplets.

7. A device (10) for treating vegetation in hedges or in trained rows or field crops according to any one of the preceding claims, **characterised in that** the lower outlet (34) in the lower part of the body (30) of the hydrocyclone (28) is provided with an underflow box (36).

8. A device (10) for treating vegetation in hedges or in trained rows or field crops according to claim 7, **characterised in that** the underflow box (36) is connected to the tank (22) by a conduit (46) to the reservoir (22) via a pump (48).

9. A device (10) for treating vegetation in hedges or in trained rows or field crops according to any one of the preceding claims, **characterised in that** it comprises a complementary spraying tool (52) with at least one nozzle (24) diffusing upwards from the bottom.
